# EUROPEAN PATENT SPECIFICATION

(11) **EP 3 491 751 B1**
(45) Date of publication and mention of the grant of the patent: **31.05.2023**
(21) Application number: 16754217.4
(22) Date of filing: 02.08.2016
(51) Int. Cl.: H04B 10/516, H04B 10/54, H04B 10/556, H04B 10/548

(54) **A DSB AND SSB HYBRID SIGNALING**
DSB- UND SSB-HYBRIDSIGNALISIERUNG
SIGNALISATION HYBRIDE DSB ET SSB

(43) Date of publication of application: 05.06.2019
(73) Proprietor: Huawei Technologies Co., Ltd., Longgang District Shenzhen, Guangdong 518129 (CN)
(72) Inventor: ZHANG, Qiang, 80992 Munich (DE); ZHOU, Enbo, 80992 Munich (DE); ZHANG, Liang, 80992 Munich (DE); XIE, Changsong, 80992 Munich (DE)
(74) Representative: Gill Jennings & Every LLP
(86) International application number: PCT/EP2016/068390
(87) International publication number: WO 2018/024314

(56) References cited:
- EP-A1- 1 975 693
- US-A1- 2012 155 887
- JIAN ZHAO ET AL: "A Novel Optical Fast OFDM with Reduced Channel Spacing Equal to Half of the Symbol Rate per Carrier", OPTICAL FIBER COMMUNICATION CONFERENCE, 1 January 2010 (2010-01-01), page OMR1, XP55306566, Washington, D.C. DOI: 10.1364/OFC.2010.OMR1 ISBN: 978-1-55752-885-8
- XINYING LI ET AL: "Study of IQ imbalance effect in direct-detection optical OFDM systems", ASIA COMMUNICATIONS AND PHOTONICS CONFERENCE AND EXHIBITION,, 2 November 2009 (2009-11-02), pages 1-6, XP031623327, ISBN: 978-1-55752-877-3
- FERREIRA F ET AL: "Dual band signal generation for millimeter-wave RoF systems with subcarrier multiplexing", EUROCON - INTERNATIONAL CONFERENCE ON COMPUTER AS A TOOL (EUROCON), 2011 IEEE, 27-29 APRIL 2011, LISBON PORTUGAL, IEEE, PISCATAWAY, NJ, 27 April 2011 (2011-04-27), pages 1-4, XP032151581, DOI: 10.1109/EUROCON.2011.5929311 ISBN: 978-1-4244-7486-8

## Description

### TECHNICAL FIELD

The disclosure relates to the field of wired communications, and more particularly to an optical fiber communication system.

### BACKGROUND

With the increasing demand for data centers, the data rate for the metro range also increases. In order to achieve a long distance (> 40 km) transmission, the C-band, which stands for conventional-band and corresponds to a third window covering a wavelength band between 1530 nm and 1570 nm, is widely deployed because of its low loss window.

Since several years, optical transmission without dispersion compensating fibers (DCFs), such as coherent optical transmission at 40 Gb/s and 100 Gb/s, begins to be deployed in long haul optical networks in order to allow higher data rates to be sent over them. Thanks to coherent detection and linear nature of chromatic dispersion (CD), the latter (CD) is effectively compensated using enhanced digital signal processing (DSP), but the implementation of such a solution is significantly impeded by the excessive cost of coherent transceivers. It is the reason why optical transmission systems comprising a high level of integration, cheap devices and sophisticated DSP have attracted a growing interest, amongst which the simple and cost-effective intensity-modulation and direct-detection (IM-DD) systems seem to be the most promising candidates.

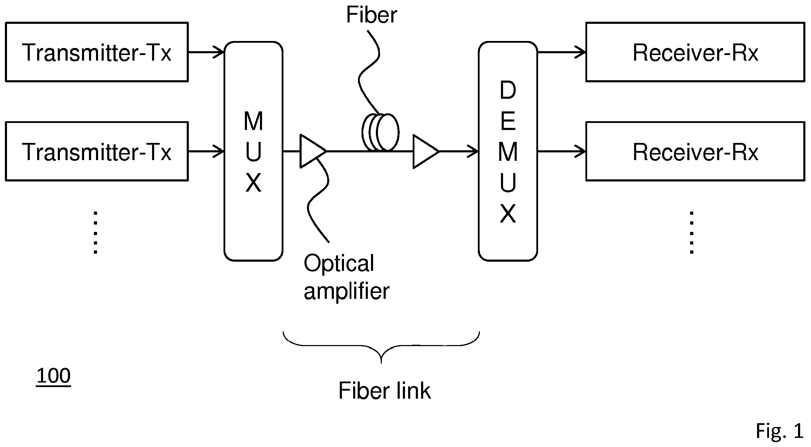

Fig. 1 shows a conventional IM-DD optical transceiver 100, which comprises at least one transmitter (Tx), at least one receiver (Rx) and at least one optical fiber linking Tx to Rx.

At the transmitter side, the data are amplified through a modulator driver (MD). The amplified data modulate a distributed feedback (DFB) laser signal using an electro-absorption modulator (EAM), which is usually integrated in transmit optical subassemblies (TOSA). The modulated optical signal is afterwards multiplexed and transmitted over several spans consisting individually of fiber and erbium-doped fiber amplifier (EDFA) towards an optical front end (OFE) of the receiver.

At the receiver side, the transmitted optical signal is de-multiplexed into a plurality of optical signals, each one being detected and converted to an electrical signal by a photo-detector (PD), such as a PIN photodiode and an avalanche photodiode (APD). The output of the PD, which is proportional to the optical signal power, is then amplified through a trans-impedance amplifier (TIA), which is usually integrated together with the PD in a receive optical subassembly (ROSA). The amplified electrical signal can afterwards be transmitted towards an automatic gain control circuit (AGC) to be adjusted to the input of an analog-to-digital converter (ADC) when electronic equalization is used. After converting from an analog-to-digital domain through the ADC, the resulting digital signal that suffers from noise and intersymbol (IS) interference is received at an equalizer.

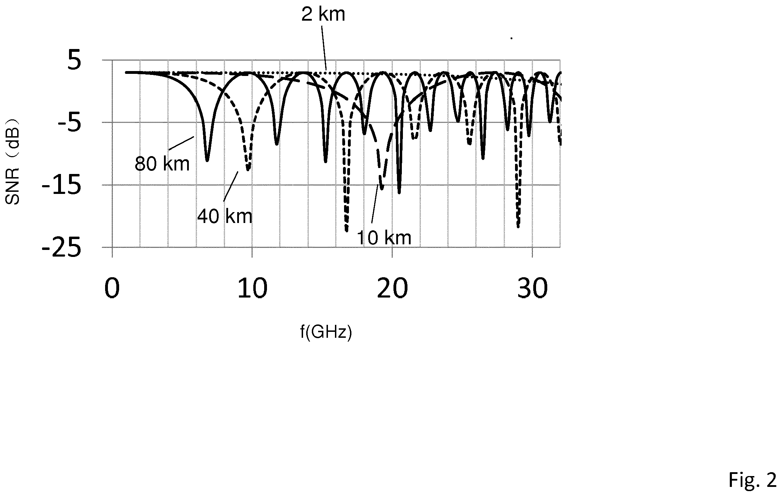

The main problem encountered by the IM-DD systems is the phenomenon of dispersion such as chromatic dispersion (CD), which degrades the performance of the signal by inducing power fading dips whose occurrence increases with the length of the fiber link, as illustrated in Fig. 2 showing an electrical signal-to-noise ratio (SNR) after a C-band IM-DD transmission over a 2-, 10-, 40- and 80-km single mode fiber (SMF) without CD compensation. Thus, the biggest challenge is to perform a high data rate (> 40 Gb/s) long haul optical transmission without dispersion compensating fiber (DCF).

To achieve longer distance transmissions, two conventional methods, based on a selective filling using a subcarrier interleaved configuration of either a double sideband (DSB) signal or a single sideband (SSB) signal, are usually used.

The DSB modulation scheme has the property that the amplitude spectrum of a DSB signal at the transmitter side is a double-sided spectrum symmetrically formed of the signal amplitude (A) above the carrier frequency and its complex conjugate (A*) below the carrier frequency. However, when the DSB signal is transmitted over the optical fiber, that property combined with the phase shift caused by the chromatic dispersion (CD) will occur in the lower and upper sidebands (LSB, USB) and will induce power fading problems so that some portion of the DSB signal in the frequency domain will be lost once received by the photo-detector (PD). This will result in a SNR loss and hence in a degradation of the performance of the wired communication system. Using the multicarrier solution, the whole frequency spectrum can be divided into a plurality of narrow frequency bandwidths corresponding to respective subcarriers. If some of those subcarriers experience fading, they will be then discarded along with their respective frequencies, which will reduce the frequency spectrum efficiency of the wired transmission system.

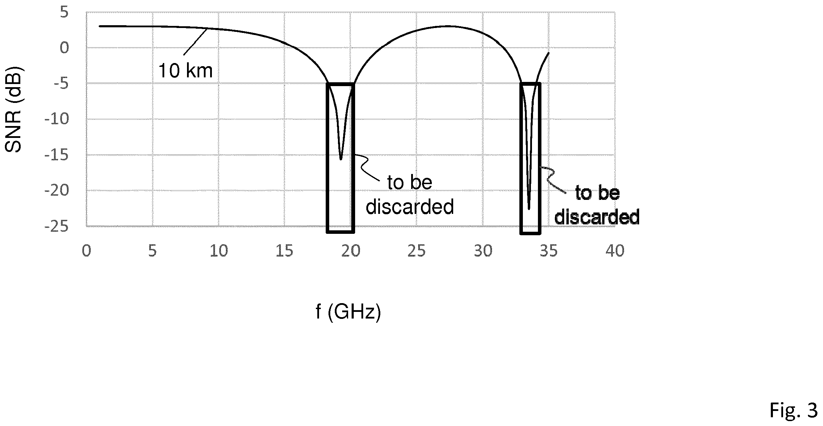

To that extent, Fig. 3 shows an electrical SNR spectrum of a DSB signal after a C-band IM-DD transmission over a 10-km SMF without CD compensation, in which the portions corresponding to the frequency bandwidths located in the fading regions are marked with a rectangle.

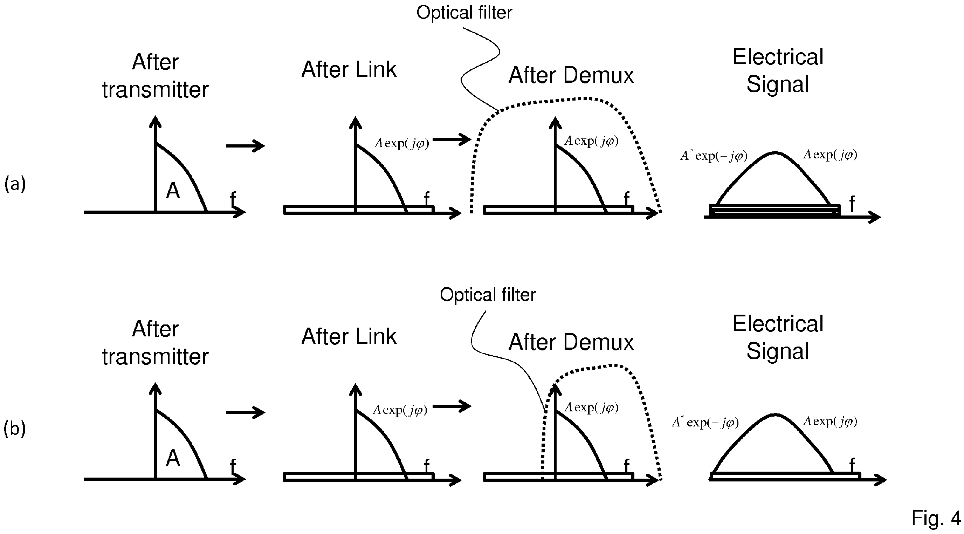

Referring to the other method using a subcarrier interleaved configuration of a SSB signal, Fig. 4 shows a schematic amplitude spectrum of an optical SSB signal output successively from: a transmitter; a fiber link depicting a broadband noise constituted by the amplified spontaneous emission (ASE) and an optical filter (DEMUX) without offset (a) and with offset (b), and a schematic amplitude spectrum of an electrical SSB signal output from a photo-detector (PD).

As depicted in Fig. 4, the SSB modulation scheme has the property that the amplitude spectrum of an optical SSB signal is a single-sided spectrum formed of the signal amplitude (A) above the carrier frequency at the transmitter side. Then, when the optical SSB signal propagates in the optical fiber, the phase shift caused by the chromatic dispersion (CD) will occur in the upper sideband (USB) and the optical SSB signal will be mainly immune to the CD-induced power fading. In the case that an optical amplifier is arranged in the fiber link, as depicted in Fig. 1, the optical noise will be added to both sidebands. Considering the fact that there is no signal in the other sideband, the added optical noise will degrade the electrical SNR and the performance of the system.

Indeed, the comparison of the electrical SNR values of a DSB signal and a SSB signal when transmitted through a 0-km fiber link, namely when in a back-to-back (B2B) configuration, reveals that the electrical SNR of the SSB signal without optical filter offset (Fig. 4a) will have a 3 dB penalty with respect to the electrical SNR of the DSB signal, and the electrical SNR of the SSB signal with optical filter offset (Fig. 4b) will have a 1.5 dB penalty with respect to the electrical SNR of the DSB signal. It results therefrom that, in the B2B configuration, the DSB signal has a better performance with respect to the SSB signal. However, as the transmission performance of an optical DSB modulation format is an inverse function of the fiber length due to the fiber CD effect, the results are reversed in some frequency ranges when the DSB and SSB signals travel through the fiber link. Indeed, in the lowest frequency range and in the frequency range far away from a DC-induced fading region, the DSB signal will have a better performance with respect to the SSB signal. On the other hand, the SSB signal, which is immune to the CD-induced fading, will have a better performance with respect to the DSB signal in the frequency range where the DC-induced fading region is located.

JIAN ZHAO ET AL: "A Novel Optical Fast OFDM with Reduced Channel Spacing Equal to Half of the Symbol Rate per Carrier", OPTICAL FIBER COMMUNICATION CONFERENCE, 1 January 2010, page OMR1, XP55306566, Washington, D.C., DOI: 10.1364/OFC.2010.OMR1, ISBN: 978-1-55752-885-8 discloses a DSB FOFDM and a SSB FOFDM configuration. Both configurations are operated independently from each other.

XINYING LI ET AL: "Study of IQ Imbalance Effect in Direct-Detection Optical OFDM Systems", ASIA COMMUNICATIONS AND PHOTONICS CONFERENCE AND EXHIBITION, 2 November 2009, pages 1-6, XP031623327, ISBN: 978-1-55752-877-3 discloses a DD-OFDM system with DSB modulation and a DD-OFDM system with SSB-modulation.

FERREIRA F ET AL: "Dual Band Signal Generation for Millimeter-wave RoF Systems with Subcarrier Multiplexing", EUROCON - INTERNATIONAL CONFERENCE ON COMPUTER AS A TOOL (EUROCON), 2011 IEEE, 27-29 APRIL 2011, LISBON PORTUGAL, IEEE, PISCATAWAY, NJ, 27 April 2011, pages 1-4, XP032151581, DOI: 10.1109/EUROCON.2011.5929311, ISBN: 978-1-4244-7486-8 discloses a transmitter in which one of the filtered harmonics is modulated by an SCM signal using single sideband or double sideband modulation.

US 2012/155887 A1 discloses a method and an apparatus for transmitting and receiving coherent optical OFDM.

### SUMMARY

It is therefore an object of the present disclosure to provide an enhanced optical fiber communication system combining the advantages of the double side-band and single side-band modulation formats in order to achieve a reliable C-band high data-rate long haul optical transmission without dispersion compensation fiber.

According to a first aspect, the invention relates to a transmitter for transmitting a multicarrier signal in an optical fiber communication system, the transmitter being adapted to transmit, towards a receiver, each subcarrier of the multicarrier signal in both a single-sideband modulation format and a double-sideband modulation format.

Thereby, a hybrid modulation format based on a single-sideband modulation format and a double-sideband modulation format can be obtained for a multicarrier signal.

According to a first implementation of the transmitter according to the first aspect, the respective modulation format, in which each subcarrier of the multicarrier signal is transmitted towards the receiver, is selected based on a comparison of a quality performance of each subcarrier when each subcarrier is individually configured in both the single-sideband modulation format and the double-sideband modulation format, respectively.

Thereby, a selective hybrid system combining the advantages of the double-sideband and single-sideband modulation formats can be obtained through a selective filling of the multicarrier signal with the selected subcarriers that are individually and selectively either in the single-sideband modulation format or in the double-sideband modulation format. It results therefrom that all the subcarriers can be used since no one is discarded.

The invention has been defined in the independent claims. Further specific technical features have been defined in the dependent claims.

Based on certain principles described in this disclosure, a hybrid modulation format based on a single-sideband modulation format and a double-sideband modulation format can be obtained for a multicarrier signal.

Based on certain principles described in this disclosure, a selective hybrid system combining the advantages of the double-sideband and single-sideband modulation formats can be obtained through a selective filling of the multicarrier signal with the selected subcarriers that are individually and selectively either in the single-sideband modulation format or in the double-sideband modulation format. It results therefrom that all the subcarriers can be used since no one is discarded.

Based on certain principles described in this disclosure, a quality performance gain can be obtained thanks to the use of all the subcarriers in an optimally selected modulation format.

Based on certain principles described in this disclosure, simple metrics related to figures of merit can be used for assessing the quality performance.

Based on certain principles described in this disclosure, alternative simple metrics related to figures of merit can be used for assessing the quality performance.

Based on certain principles described in this disclosure, an intensity-modulation direct-detection wired communication system can be obtained.

Based on certain principles described in this disclosure, the CD-induced power fading problems resulting from the double-sideband modulation format after going through the fiber link can be mitigated thanks to the selectivity of the hybrid modulation format of the subcarriers of the multicarrier signal.

Based on certain principles described in this disclosure, the method can be performed in an automatic and repeatable manner.

Implementations of the disclosure can be implemented in hardware, software or in any combination thereof.

It shall further be understood that a preferred implementation of the disclosure can also be any combination of the dependent claims or above implementations with the respective independent claim.

These and other aspects of the disclosure will be apparent and elucidated with reference to the implementations described hereinafter.

### BRIEF DESCRIPTION OF THE DRAWINGS

In the following detailed portion of the present disclosure, the disclosure will be explained in more detail with reference to the exemplary implementations shown in the drawings, in which:
- Fig. 1: shows a conventional IM-DD optical transceiver 100;
- Fig. 2: shows an electrical SNR spectrum after a C-band IM-DD transmission over a 2-, 10-, 40- and 80-km SMF without CD compensation;
- Fig. 3: shows an electrical SNR spectrum of a DSB signal after a C-band IM-DD transmission over a 10-km SMF without CD compensation;
- Fig. 4: shows a schematic amplitude spectrum of an optical SSB signal output successively from: a transmitter; a fiber link depicting a broadband noise constituted by the ASE and an optical filter (DEMUX) without offset (a) and with offset (b), and a schematic amplitude spectrum of an electrical SSB signal output from a PD;
- Fig. 5: shows a flow chart describing the steps for selecting a modulation format of a subcarrier of a multicarrier signal in an optical fiber communication system according to a first implementation of the present disclosure;
- Fig. 6: shows an electrical SNR spectrum of a DSB and SSB hybrid multicarrier signal after a C-band IM-DD transmission over a 10-km SMF without CD compensation according to a second implementation of the present disclosure;
- Fig. 7: shows a SNR spectrum of (a) an optical DSB multicarrier signal in the case of a B2B configuration, (b) an electrical DSB multicarrier signal obtained after optical-to-electrical conversion in the case of a B2B configuration, (c) an optical DSB multicarrier signal after transmission through a fiber link with 800 ps/nm chromatic dispersion, (d) an electrical DSB multicarrier signal obtained after transmission through a fiber link with 800 ps/nm chromatic dispersion and followed by an optical-to-electrical conversion, according to a third implementation of the present disclosure;
- Fig. 8: shows a SNR spectrum of (a) an optical SSB multicarrier signal in the case of a B2B configuration, (b) an electrical SSB multicarrier signal obtained after optical-to-electrical conversion in the case of a B2B configuration, (c) an optical SSB multicarrier signal after transmission through a fiber link with 800 ps/nm chromatic dispersion, (d) an electrical SSB multicarrier signal obtained after transmission through a fiber link with 800 ps/nm chromatic dispersion followed by an optical-to-electrical conversion, according to a fourth implementation of the present disclosure; and

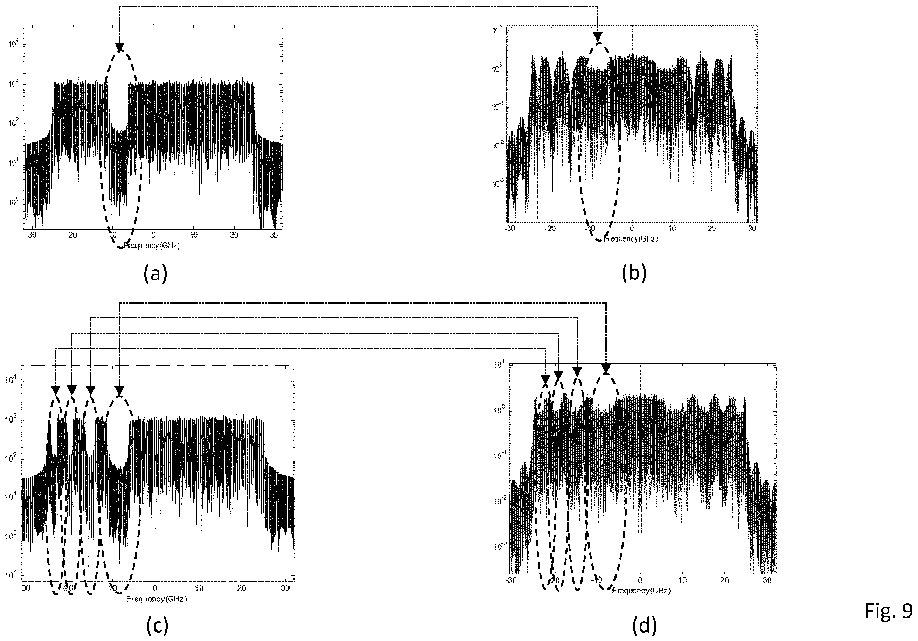

- Fig. 9: shows a SNR spectrum of (a) an optical DSB and SSB hybrid multicarrier signal with a single SSB sub-band (such as indicated by the dashed circle) in the case of a B2B configuration, (b) an electrical DSB and SSB hybrid multicarrier signal with a single SSB sub-band (such as indicated by the dashed circle) after transmission through a fiber link with 800 ps/nm chromatic dispersion followed by an optical-to-electrical conversion, (c) an optical DSB and SSB hybrid multicarrier signal with a plurality of SSB sub-bands (such as indicated by the respective dashed circles) in the case of a B2B configuration, (d) an electrical DSB and SSB hybrid multicarrier signal with a plurality of SSB sub-bands (such as indicated by the respective dashed circles) after transmission through a fiber link with 800 ps/nm chromatic dispersion followed by an optical-to-electrical conversion, according to a fifth implementation of the present disclosure.

Identical reference signs are used for identical or at least functionally equivalent features.

### DETAILED DESCRIPTION OF IMPLEMENTATIONS OF THE DISCLOSURE

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

The optical fiber communication system of the present disclosure is based on the conventional IM-DD optical transceiver 100 of Fig. 1, in which at least one transmitter (Tx) is coupled to at least one receiver (Rx) through at least one fiber link as depicted therein.

Furthermore, each transmitter (Tx) is adapted to transmit a respective multicarrier signal having a subcarrier interleaved configuration, wherein each subcarrier of the respective multicarrier signal is transmitted in both a single-sideband (SSB) modulation format and a double-sideband (DSB) modulation format.

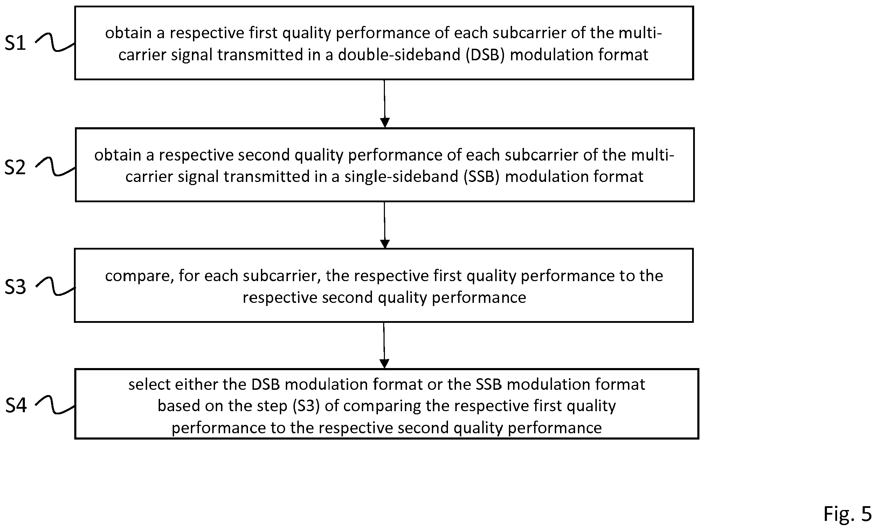

Fig. 5 shows a flow chart describing the steps for selecting the modulation format, either SSB or DSB, of a subcarrier of a multicarrier signal in an optical fiber communication system according to an implementation of the present disclosure.

The modulation format amongst the SSB and the DSB can be selectively obtained for each subcarrier of the multicarrier signal by seeking for the best quality performance when each of the subcarriers is transmitted in both the SSB modulation format and the DSB modulation format.

The quality performance can be based on a figure of merit, such as the signal-to-noise ratio (SNR) and the quality factor (also widely known as Q-factor), SNR and Q-factor varying in a same direction as the quality performance. The quality performance can also be based on other figures of merit, such as a bit error rate (BER) or an error vector magnitude (EVM), BER and EVM varying in an opposite direction to the quality performance and EVM being, as a reminder, a figure of merit for modulation accuracy. It should be understood that the above list of the figures of merit, on which the quality performance is based, is not exhaustive.

Referring to Fig. 5, the method for selecting the modulation format comprises the following steps (S1-S4).

In a first step (S 1), a respective first quality performance of each subcarrier of the multicarrier signal transmitted in the DSB modulation format is obtained.

In a second step (S2), a respective second quality performance of each subcarrier of the multicarrier signal transmitted in the SSB modulation format is obtained.

In a third step (S3), the respective first and second quality performances are compared to each other.

In a fourth step (S4), either the SSB modulation format or the DSB modulation format is selected according to the comparison result derived from the third step (S3).

The selection of the modulation format (SSB, DSB) is based on the following scenarios.

In a first scenario, the SSB modulation format is selected when the respective second quality performance is better than the respective first quality performance, otherwise the DSB modulation format is selected, i.e., when the respective first quality performance is better than the respective second quality performance.

In a second scenario, the SSB modulation format is selected when the respective second quality performance is better than the respective first quality performance and a quality performance penalty between the first quality performance and the second quality performance exceeds a reference value (x dB) in absolute value, otherwise the DSB modulation format is selected, i.e., when the respective first quality performance is better than the respective second quality performance or when the respective second quality performance is better than the respective first quality performance and a quality performance penalty between the first quality performance and the second quality performance is below the reference value (x dB) in absolute value.

Thus, a selective filling of subcarriers transmitted in either the SSB modulation format or the DSB modulation format can be obtained in order to combine the advantages of each modulation format, i.e., robustness against any CD-induced power fading for the SSB format and robustness against any optical filter offset for the DSB format. Thereby, no signal portion of the multicarrier can be lost within the whole frequency spectrum. Indeed, in the exemplary case of the first scenario where the quality performance of a multicarrier signal whose subcarriers are transmitted in the DSB modulation format is measured using an electrical SNR spectrum, the power fading dips in the fading portions will be filled with some subcarriers transmitted in the SSB modulation format in order to mitigate the CD-related penalty and thereby to increase the SNR gain. The other flat portions of the multicarrier signal will remain then unchanged.

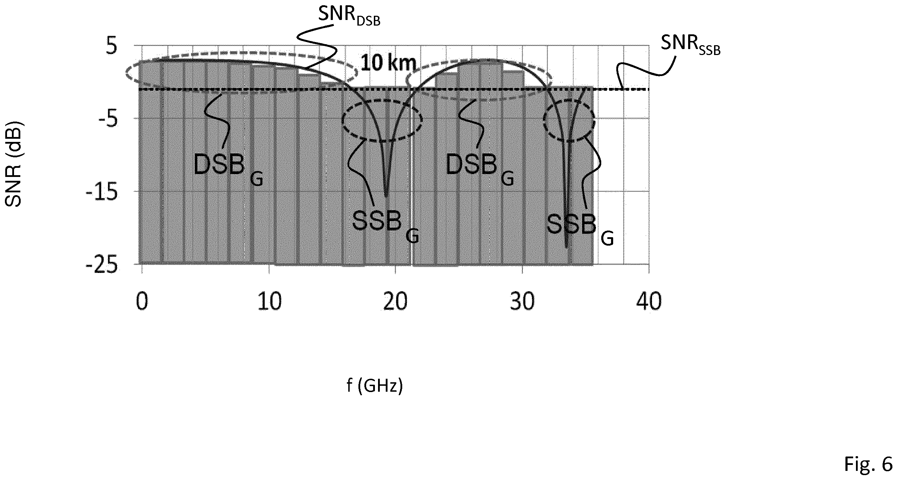

To that extent, Fig. 6 shows an electrical SNR spectrum of a DSB and SSB hybrid multicarrier signal after a C-band IM-DD transmission over a 10-km SMF without CD compensation according to an implementation of the present disclosure.

Fig. 6 is depicted in the illustrative case where the SSB modulation format of a subcarrier is selected when, at a given frequency or narrow frequency bandwidth dedicated to the subcarrier, its electrical SNR (denoted as SNR_{SSB}) is greater than the one (denoted as SNR_{DSB}) obtained in the DSB modulation format. On the other hand, the DSB modulation format of the subcarrier is selected when its electrical SNR (denoted as SNR_{DSB}) is greater than the one (denoted as SNR_{SSB}) obtained in the SSB modulation format. The signal portion within the dashed circle is the gain range obtained by either the DSB format with respect to the SSB format, as indicated by DSB_{G}, or the SSB format with respect to the DSB format, as indicated by SSB_{G}.

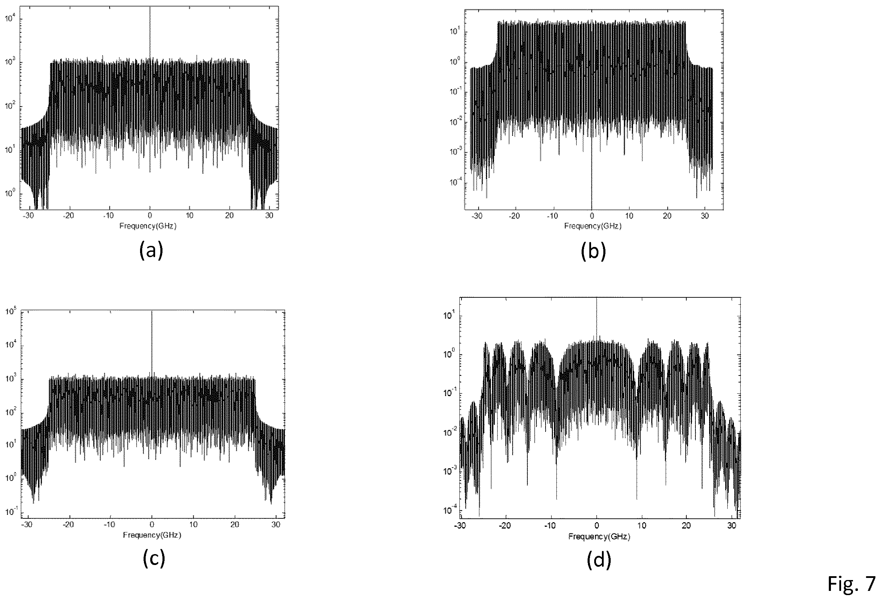

Fig. 7 shows a SNR spectrum of (a) an optical DSB multicarrier signal in the case of a B2B configuration, (b) an electrical DSB multicarrier signal obtained after optical-to-electrical conversion via a photo-detector (PD) in the case of a B2B configuration, (c) an optical DSB multicarrier signal after transmission through a fiber link with 800 ps/nm chromatic dispersion, (d) an electrical DSB multicarrier signal obtained after transmission through a fiber link with 800 ps/nm chromatic dispersion followed by an optical-to-electrical conversion via the PD, according to an implementation of the present disclosure.

As depicted in Figs. 7(a) to 7(c), the respective SNR spectrum can be considered flat within the whole frequency spectrum. However, Fig. 7(d) divulges at the receiver side a plurality of fading dips after transmission through the fiber link and once the optical-to-electrical conversion via the photo-detector has occurred, thereby revealing a deterioration of the system performance.

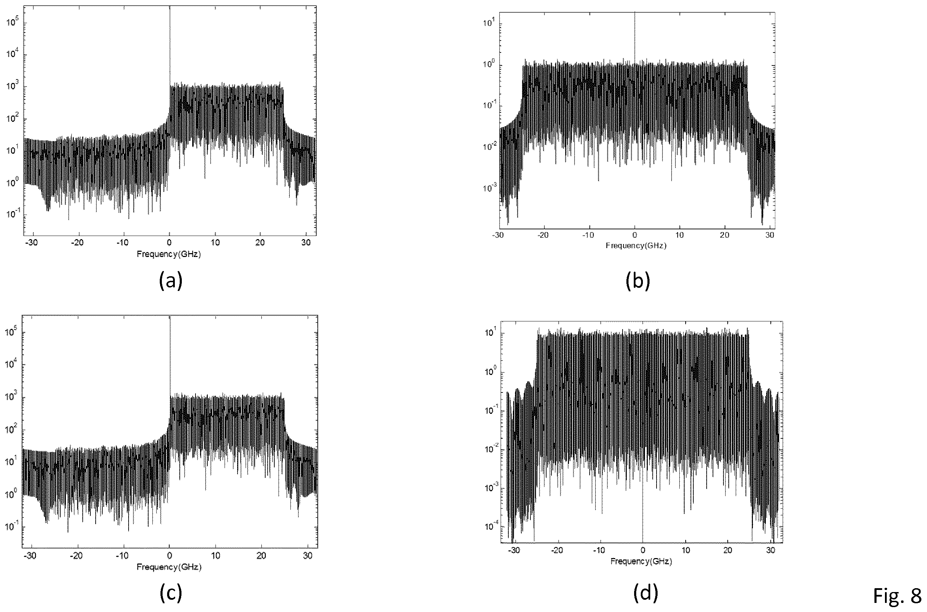

Fig. 8 shows a SNR spectrum of (a) an optical SSB multicarrier signal in the case of a B2B configuration, (b) an electrical SSB multicarrier signal obtained after optical-to-electrical conversion via a PD in the case of a B2B configuration, (c) an optical SSB multicarrier signal after transmission through a fiber link with 800 ps/nm chromatic dispersion, (d) an electrical SSB multicarrier signal obtained after transmission through a fiber link with 800 ps/nm chromatic dispersion followed by an optical-to-electrical conversion via the PD, according to an implementation of the present disclosure.

As depicted in all the Figs. 8(a) to 8(d), the respective SNR spectrum can be considered flat within the whole frequency spectrum, thereby revealing the immunity of the SSB modulation format to the CD-induced power fading even in the case of a transmission through a fiber link followed by an optical-to-electrical conversion.

Fig. 9 shows a SNR spectrum of (a) an optical DSB and SSB hybrid multicarrier signal with a single SSB sub-band (such as indicated by the dashed circle) in the case of a B2B configuration, (b) an electrical DSB and SSB hybrid multicarrier signal with a single SSB sub-band (such as indicated by the dashed circle) after transmission through a fiber link with 800 ps/nm chromatic dispersion followed by an optical-to-electrical conversion via a PD, (c) an optical DSB and SSB hybrid multicarrier signal with a plurality of SSB sub-bands (such as indicated by the respective dashed circles) in the case of a B2B configuration, (d) an electrical DSB and SSB hybrid multicarrier signal with a plurality of SSB sub-bands (such as indicated by the respective dashed circles) after transmission through a fiber link with 800 ps/nm chromatic dispersion followed by an optical-to-electrical conversion via the PD, according to an implementation of the present disclosure.

The SNR spectrum of the optical hybrid multicarrier signal of Fig. 9(a) corresponds to the SNR spectrum of the optical DSB multicarrier signal of Fig. 7(a), in which a single DSB signal portion corresponding to a certain frequency bandwidth has been discarded and filled with a single SSB sub-band of a plurality of sub-carriers corresponding to said frequency bandwidth and transmitted in the SSB modulation format. Thereby, the SNR spectrum of the electrical hybrid multicarrier signal of Fig. 9(b) corresponds to the SNR spectrum of the electrical DSB multicarrier signal of Fig. 7(d), but without the first fading dip such as indicated by the dashed circle.

The SNR spectrum of the optical hybrid multicarrier signal of Fig. 9(c) corresponds to the SNR spectrum of the optical DSB multicarrier signal of Fig. 7(a), in which a plurality of DSB signal portions corresponding to a plurality of frequency bandwidths has been discarded and filled with a respective plurality of SSB sub-bands of a respective plurality of sub-carriers corresponding respectively to said plurality of frequency bandwidths and transmitted respectively in the SSB modulation format. Thereby, the SNR spectrum of the electrical hybrid multicarrier signal of Fig. 9(d) corresponds to the SNR spectrum of the electrical DSB multicarrier signal of Fig. 7(d), but without the corresponding fading dips such as indicated by the dashed circles.

In summary, the present disclosure relates to an IM-DD optical transceiver working with a double-sideband (DSB) and single-sideband (SSB) hybrid signaling. A multicarrier signal using a subcarrier interleaved configuration is transmitted from at least one transmitter towards at least one receiver through at least one optical fiber link. A respective first quality performance of each subcarrier transmitted in a DSB modulation format is compared to a respective second quality performance of each subcarrier transmitted in a SSB modulation format. The modulation format amongst DSB and SSB is respectively selected for each subcarrier as to achieve the better quality performance. A selective filling of each subcarrier can then be obtained in order to get a multicarrier signal free of CD-induced fading dips even after its transmission through the fiber link and an optical-to-electrical conversion at the receiver side.

In the claims, the word "comprising" does not exclude other elements or steps, and the indefinite article "a" or "an" does not exclude a plurality. A single processor or other unit may fulfill the functions of several items recited in the claims. A computer program may be stored/distributed on a suitable medium, such as an optical storage medium or a solid-state medium supplied together with or as part of other hardware, but may also be distributed in other forms, such as via the Internet or other wired telecommunication systems.

The scope of protection shall be defined by the appended claims.

## Claims

1. A transmitter (Tx) for transmitting a multicarrier signal in an optical fiber communication system, wherein the transmitter (Tx) is adapted to transmit, towards a receiver (Rx) each subcarrier of the multicarrier signal in a single-sideband (SSB) modulation format or a double-sideband (DSB) modulation format **characterized in that** the transmitter is specifically adapted to select the respective modulation format in which each subcarrier of the multicarrier signal is transmitted towards the receiver (Rx) based on a comparison of a first quality performance when the subcarrier is configured in the SSB modulation format and a second quality performance when the subcarrier is configured in the DSB modulation format.

2. The transmitter (Tx) of claim 1, wherein the selected modulation format corresponds to the better quality performance.

3. The transmitter (Tx) of claim 1 or 2, wherein each quality performance is based on either a signal-to-noise ratio (SNR) or a quality factor (Q-factor), the SNR and the Q-factor varying in a same direction as the quality performance.

4. The transmitter (Tx) according to claim 1 or 2, wherein each quality performance is based on either a bit error rate (BER) or an error vector magnitude (EVM), the BER and the EVM varying in an opposite direction to the quality performance.

5. A wired communication system comprising:
- at least one transmitter (Tx) for transmitting a multicarrier signal as claimed in claims 1 to 4; and
- at least one receiver (Rx) for receiving the multicarrier signal.

6. The wired communication system of claim 5, wherein the receiver (Rx) comprises a photo-detector adapted to perform an optical to electrical conversion by converting each received subcarrier of the multicarrier signal to a respective electrical signal.

7. The wired communication system of claim 5 or 6, the system comprising at least one fiber link adapted to couple the at least one transmitter (Tx) and at least one receiver (Rx).

8. A method for selecting a modulation format of a subcarrier of a multicarrier signal in an optical fiber communication system, the method is **characterized by**:
- obtaining a respective first quality performance of each subcarrier of the multicarrier signal transmitted in a double-sideband (DSB) modulation format;
- obtaining a respective second quality performance of each subcarrier of the multicarrier signal transmitted in a single-sideband (SSB) modulation format;
- comparing, for each subcarrier, the respective first quality performance to the respective second quality performance; and
- selecting either the DSB modulation format or the SSB modulation format based on the step of comparing the respective first quality performance to the respective second quality performance.

9. The method of claim 8, wherein the SSB modulation format is selected when the respective second quality performance is better than the respective first quality performance, otherwise the DSB modulation format is selected.

10. The method of claim 8, wherein the SSB modulation format is selected when the respective second quality performance is better than the respective first quality performance and a quality performance penalty between the first quality performance and the second quality performance exceeds a reference value (x dB) in absolute value, otherwise the DSB modulation format is selected.

11. A computer program comprising instructions to cause the transmitter of any one of claims 1 to 4 to execute the steps of the method of any one of claims 8 to 10.

## Patentansprüche

1. Sender (Tx) zum Senden eines Mehrträgersignals in einem Lichtwellenleiter-Kommunikationssystem, wobei der Sender (Tx) dazu eingerichtet ist, hin zu einem Empfänger (Rx) jeden Unterträger des Mehrträgersignals in einem Einseitenband(SSB)-Modulationsformat oder einem Zweiseitenband(DSB)-Modulationsformat zu senden, **dadurch gekennzeichnet, dass** der Sender insbesondere dazu eingerichtet ist, das jeweilige Modulationsformat, in dem jeder Unterträger des Mehrträgersignals hin zu dem Empfänger (Rx) gesendet wird, basierend auf einem Vergleich einer ersten Qualitätsleistung, wenn der Unterträger in dem SSB-Modulationsformat konfiguriert ist, und einer zweiten Qualitätsleistung, wenn der Unterträger in dem DSB-Modulationsformat konfiguriert ist, auszuwählen.

2. Sender (Tx) nach Anspruch 1, wobei das ausgewählte Modulationsformat der besseren Qualitätsleistung entspricht.

3. Sender (Tx) nach Anspruch 1 oder 2, wobei jede Qualitätsleistung auf entweder einem Signal-Rausch-Verhältnis (SNR) oder einem Qualitätsfaktor (Q-Faktor) basiert, wobei das SNR und der Q-Faktor in einer selben Richtung wie die Qualitätsleistung variieren.

4. Sender (Tx) nach Anspruch 1 oder 2, wobei jede Qualitätsleistung auf entweder einer Bitfehlerrate (BER) oder einer Fehlervektorgröße (EVM) basiert, wobei die BER und die EVM in einer entgegengesetzten Richtung zu der Qualitätsleistung variieren.

5. Drahtgebundenes Kommunikationssystem, umfassend:
mindestens einen Sender (Tx) zum Senden eines Mehrträgersignals, wie in den Ansprüchen 1 bis 4 beansprucht; und
mindestens einen Empfänger (Rx) zum Empfangen des Mehrträgersignals.

6. Drahtgebundenes Kommunikationssystem nach Anspruch 5, wobei der Empfänger (Rx) einen Fotodetektor umfasst, der dazu eingerichtet ist, eine optisch-zu-elektrische Umwandlung durch Umwandeln jedes empfangenen Unterträgers des Mehrträgersignals in ein jeweiliges elektrisches Signal durchzuführen.

7. Drahtgebundenes Kommunikationssystem nach Anspruch 5 oder 6, wobei das System mindestens eine Faserverbindung umfasst, die dazu eingerichtet ist, den mindestens einen Sender (Tx) und den mindestens einen Empfänger (Rx) zu koppeln.

8. Verfahren zum Auswählen eines Modulationsformats eines Unterträgers eines Mehrträgersignals in einem Lichtwellenleiter-Kommunikationssystem, wobei das Verfahren **gekennzeichnet ist durch**:
Erhalten einer jeweiligen ersten Qualitätsleistung jedes Unterträgers des Mehrträgersignals, der in einem Zweiseitenband(DSB)-Modulationsformat übertragen wird;
Erhalten einer jeweiligen zweiten Qualitätsleistung jedes Unterträgers des Mehrträgersignals, der in einem Einseitenband(SSB)-Modulationsformat übertragen wird;
Vergleichen, für jeden Unterträger, der jeweiligen ersten Qualitätsleistung mit der jeweiligen zweiten Qualitätsleistung; und
Auswählen entweder des DSB-Modulationsformats oder des SSB-Modulationsformats basierend auf dem Schritt zum Vergleichen der jeweiligen ersten Qualitätsleistung mit der jeweiligen zweiten Qualitätsleistung.

9. Verfahren nach Anspruch 8, wobei das SSB-Modulationsformat ausgewählt wird, wenn die jeweilige zweite Qualitätsleistung besser als die jeweilige erste Qualitätsleistung ist, wobei andernfalls das DSB-Modulationsformat ausgewählt wird.

10. Verfahren nach Anspruch 8, wobei das SSB-Modulationsformat ausgewählt wird, wenn die jeweilige zweite Qualitätsleistung besser als die jeweilige erste Qualitätsleistung ist und ein Qualitätsleistungsnachteil zwischen der ersten Qualitätsleistung und der zweiten Qualitätsleistung einen Referenzwert (x dB) in einem absoluten Wert übersteigt, wobei ansonsten das DSB-Modulationsformat ausgewählt wird.

11. Computerprogramm, das Anweisungen umfasst, um den Sender nach einem der Ansprüche 1 bis 4 zu veranlassen, die Schritte des Verfahrens nach einem der Ansprüche 8 bis 10 auszuführen.

## Revendications

1. Émetteur (Tx) pour émettre un signal multiporteuse dans un système de communication par fibre optique, l'émetteur (Tx) étant adapté à émettre, en direction d'un récepteur (Rx), chaque sous-porteuse du signal multiporteuse dans un format de modulation à bande latérale unique (SSB) ou un format de modulation à double bande latérale (DSB), l'émetteur étant **caractérisé en ce qu'**il est plus particulièrement adapté à sélectionner le format de modulation respectif dans lequel chaque sous-porteuse du signal multiporteuse est émise en direction du récepteur (Rx) sur la base d'une comparaison d'une première performance de qualité lorsque la sous-porteuse est configurée dans le format de modulation SSB et d'une deuxième performance de qualité lorsque la sous-porteuse est configurée dans le format de modulation DSB.

2. Émetteur (Tx) selon la revendication 1, dans lequel le format de modulation sélectionné correspond à la meilleure performance de qualité.

3. Émetteur (Tx) selon la revendication 1 ou 2, dans lequel chaque performance de qualité est basée soit sur un rapport signal/bruit (SNR), soit sur un facteur de qualité (Q-factor), le SNR et le Q-factor variant dans le même sens que la performance de qualité.

4. Émetteur (Tx) selon la revendication 1 ou 2, dans lequel chaque performance de qualité est basée soit sur un taux d'erreurs sur les bits (BER), soit sur une grandeur vectorielle d'erreur (EVM), le BER et l'EVM variant en sens opposé à la performance de qualité.

5. Système de communication filaire, comprenant :
au moins un émetteur (Tx) pour émettre un signal multiporteuse selon les revendications 1 à 4 ; et
au moins un récepteur (Rx) pour recevoir le signal multiporteuse.

6. Système de communication filaire selon la revendication 5, dans lequel le récepteur (Rx) comprend un photodétecteur adapté à réaliser une conversion optique/électrique en convertissant chaque sous-porteuse reçue du signal multiporteuse en un signal électrique respectif.

7. Système de communication filaire selon la revendication 5 ou 6, le système comprenant au moins une liaison par fibre adaptée à coupler l'au moins un émetteur (Tx) à au moins un récepteur (Rx).

8. Procédé de sélection d'un format de modulation d'une sous-porteuse d'un signal multiporteuse dans un système de communication par fibre optique, le procédé étant **caractérisé par** :
l'obtention d'une première performance de qualité respective de chaque sous-porteuse du signal multiporteuse émise dans un format de modulation à double bande latérale (DSB) ;
l'obtention d'une deuxième performance de qualité respective de chaque sous-porteuse du signal multiporteuse émise dans un format de modulation à bande latérale unique (SSB) ;
la comparaison, pour chaque sous-porteuse, de la première performance de qualité respective à la deuxième performance de qualité respective ; et
la sélection soit du format de modulation DSB, soit du format de modulation SSB sur la base de l'étape de comparaison de la première performance de qualité respective à la deuxième performance de qualité respective.

9. Procédé selon la revendication 8, dans lequel le format de modulation SSB est sélectionné lorsque la deuxième performance de qualité respective est meilleure que la première performance de qualité respective, le format de modulation DSB étant sélectionné dans le cas contraire.

10. Procédé selon la revendication 8, dans lequel le format de modulation SSB est sélectionné lorsque la deuxième performance de qualité respective est meilleure que la première performance de qualité respective et une pénalité de performance de qualité entre la première performance de qualité et la deuxième performance de qualité dépasse une valeur de référence (x dB) en valeur absolue, le format de modulation DSB étant sélectionné dans le cas contraire.

11. Programme d'ordinateur comprenant des instructions pour amener l'émetteur selon l'une quelconque des revendications 1 à 4 à exécuter les étapes du procédé selon l'une quelconque des revendications 8 à 10.
